# EUROPEAN PATENT SPECIFICATION

(11) **EP 1 190 545 B1**
(45) Date of publication and mention of the grant of the patent: **22.10.2003**
(21) Application number: 00942757.6
(22) Date of filing: 13.06.2000
(51) Int. Cl.: G06F 9/46

(54) **METHOD AND SYSTEM FOR UPDATING POSITION INFORMATION IN A DISTRIBUTED SYSTEM WITH CODE MOBILITY**
VERFAHREN UND VORRICHTUNG ZUM AKTUALISIEREN VON POSITIONSINFORMATION IN EINEM VERTEILTEN SYSTEM MIT KODEMOBILITÄT
PROCEDE ET SYSTEME DE MISE A JOUR D'INFORMATIONS SUR L'EMPLACEMENT DANS UN SYSTEME DISTRIBUE A MOBILITE DE CODES

(30) Priority: 14.06.1999 US 332030
(43) Date of publication of application: 27.03.2002
(73) Proprietor: Sun Microsystems, Inc., Santa Clara, California 95054 (US)
(72) Inventor: WALDO, James, H., Dracut, MA 01826 (US); WOLLRATH, Ann, M., Groton, MA 01450 (US)
(74) Representative: Beresford, Keith Denis Lewis
(86) International application number: US0016085
(87) International publication number: WO00078003

(56) References cited:
- EP-A- 0 836 140
- US-A- 5 325 524
- JUL E ET AL: "FINE-GRAINED MOBILITY IN THE EMERALD SYSTEM" ACM TRANSACTIONS ON COMPUTER SYSTEMS,US,ASSOCIATION FOR COMPUTING MACHINERY. NEW YORK, vol. 6, no. 1, 1 February 1988 (1988-02-01), pages 109-133, XP002023563 ISSN: 0734-2071
- "HYBRID METHOD FOR LOCATING MOBILE OBJECTS" IBM TECHNICAL DISCLOSURE BULLETIN,US,IBM CORP. NEW YORK, vol. 36, no. 6A, 1 June 1993 (1993-06-01), pages 381-382, XP000372464 ISSN: 0018-8689

## Description

This invention generally relates to a data processing system, and more particularly to a method and system for updating position information of mobile entities in a distributed system.

An example of a prior art system which permits shared access to system resources for a lease period requested by a request platform is disclosed in EP-A-0836140. In EP-A-0836140, a system resource is automatically deallocated when a lease period expires.

In a computer network or distributed system made up of cooperating computational entities, herein referred to as "objects," running on a number of machines, it is often desirable to allow some of these objects to move from one machine to another. These objects may be any computational entity, code, or software, and reasons for this movement include:(i) to allow balancing the load on the overall system, (ii) to allow the computation to be co-located with some block of data, or (iii) to allow multiple cooperating processes to become co-located to share information. Finding such an object once it has moved becomes a problem in such systems. The problem of locating mobile objects in a network is discussed extensively in agent technology literature such as "Mobile Object Systems: Towards the Programmable Internet," J.Vitek and C. Tschudin eds., Springer-Verlag, 1997.

Approaches to solve this object mobility problem generally take one of three forms. In the first, the object that is moving is responsible for telling a client that might be interested in the object of its new location. The problem with this approach is that the moving object might not be able to tell every interested client, either because of network faults or because it does not know all of the clients that currently have a pointer to the moving object showing the client the current location of the object. In addition, such updates can be unnecessarily expensive, because they might updates clients that no longer care about the location of the mobile objects.

A second conventional solution to the mobile object problem is disclosed in US-A-5325524. This discloses leaving a forwarding pointer, sometimes referred to as a "tombstone," at the current location of the moving object which will act as a forwarding agent, directing any communication to the mobile object at its new location. This approach also has object mobility problems - the forwarding pointers need to be left at every location at which the mobile object has existed, taking up valuable system resources, and if the machine on which a forwarding pointer is placed ever becomes unavailable, the mobile object may not be capable of being found by some set of clients that are interested in it.

A third conventional approach to solve the object mobility problem is to leave a single "anchor" for the mobile object at the original location of the object. This anchor must be informed of every move of the mobile object so that it will always know the current address of the object and forward any communication to that current address. The problem with this approach is that it requires that the original location of the mobile object always exist for the lifetime of the object, and always be available. Further, it especially requires that the anchor must be available and reachable from any location to which the mobile object might go.

As such, it would be desirable to have a method and system that avoids the problems associated with conventional solutions for handling object mobility.

Methods and systems in accordance with the present invention allow mobile computational entities or objects in a distributed system to move and leave forwarding pointers. The object's clients take "leases" on the object for the period of time they will need to access the object. The forwarding pointers are created when an object leaves a server and contain information on the set of leases or the longest outstanding lease held by client(s) on the mobile object. The forwarding pointers allow an object to move from one server to another server without notifying its clients, and the memory space of the forwarding pointers may be reclaimed when they are no longer needed. As a result, if a mobile object moves many times and leaves many forwarding pointers, they will not unnecessarily consume memory resources whereas old forwarding pointers will automatically disappear.

In accordance with aspects of the present invention there are provided a method for updating information on an object's location in a distributed system in accordance with claim 1, a computer-readable medium containing instructions for controlling a data processing system in accordance with claim 9, and apparatus for updating information on an object's location in accordance with claim 17.
Figure 1 shows a network having several client and server computers in accordance with the present invention;
Figure 2 illustrates hardware and software components of a computer system in accordance with the present invention;
Figure 3 depicts several client and server computers and a mobile object that has not changed locations in accordance with the present invention;
Figure 4 shows several client and server computers, a mobile object that has moved once, and a forwarding pointer in accordance with the present invention;
Figure 5 is a flowchart illustrating steps used in a method for a client to request a client access to a mobile object in accordance with the present invention;
Figure 6 illustrates several client and server computers, a mobile object that has moved twice, and two forwarding pointers in accordance with the present invention; and
Figure 7 is a flowchart illustrating steps used in a method using a forwarding pointer in accordance with the present invention.

Methods and systems in accordance with the present invention allow the location of mobile computational entities or software, referred to herein as "objects," to be updated efficiently and in a fault-tolerant distributed system. They allow mobile objects to move about a distributed system without notifying each client that may need to locate an object of its new location. Generally, methods and systems in accordance with the present invention combine the use of forwarding pointers with the concept of a software "lease" described below. To more efficiently update the location of mobile objects, a forwarding pointer is left on the server from which the object is leaving, and the forwarding pointer contains information regarding the new location of the object and information regarding the unexpired or "valid" leases on the object or the longest outstanding valid lease.

In accordance with the present invention, clients lease references to the objects in the distributed system that allow the clients to locate and access the objects when they are needed. When a reference to such a distributed mobile object is obtained, it is only guaranteed to be valid for a period of time negotiated by the requester and the entity that hands out the reference. The lease of the reference is the period of time that the reference is guaranteed. The holder of the reference may renew the lease prior to the expiration of the lease or explicitly cancel the lease during the lease. However, if the holder of the leased reference does not take either of these actions, the expiration of the lease allows the grantor of the lease to invalidate the outstanding reference. Further, if the holder of the reference is unable or unwilling to renew the lease prior to expiration, the holder of the leased reference also knows that the reference is now invalid. Leasing is described in detail in EP-A-0836140 entitled "Methods, Apparatus, and Product for Managing Resources".

Methods and systems in accordance with the present invention combine leasing with forwarding pointers. When an object moves from its current location and has valid unexpired leases from one or more clients, it leaves a forwarding pointer that contains forwarding information of the new location of the object as well as information regarding the set of leases or the longest outstanding lease that is valid at the time the object leaves the current location. This forwarding pointer exists until all valid leases to the object have expired because a mobile object must have a way to inform all clients having valid leases on the object how to reference it. This forwarding pointer can be erased or garbage collected when the leases it contains are no longer valid because no more clients will be accessing that location for the corresponding mobile object. Thus, its memory space may be reclaimed and reused.

When a client is not aware of an object's move to a new location, the forwarding pointer receives the request from the client to access the object and returns the forwarding information to the client and/or forwards the request to the new location. Similarly, if a client is not aware of the mobile object's move and requests a renewal on a lease, the forwarding pointer receives the request from the client but does not renew the lease. Again, it returns the forwarding information to the client and/or forwards the call to the object so that the client may make the lease renewal request to the mobile object.

If a client has no lease on a mobile object or its lease expires, it must locate the mobile object through other methods such as a directory service.

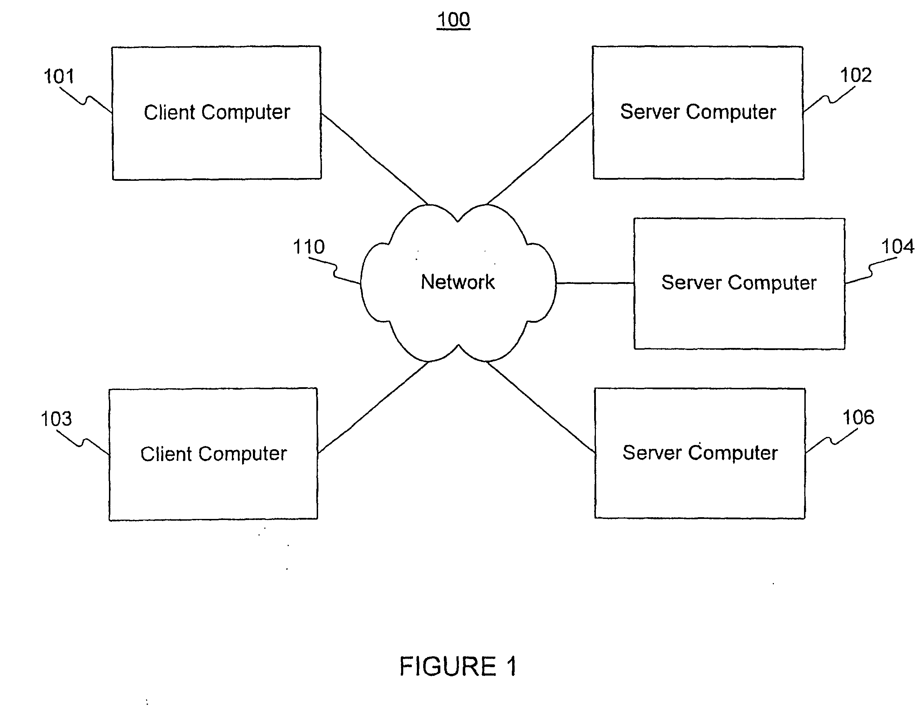

Figure 1 shows a data processing system 100 suitable for use with methods and systems consistent with the present invention with several client computers 101 and 103 and server computers 102, 104 and 106 connected via a network 110, such as the Internet, a wide area network ("WAN") or a local area network ("LAN"). Typically, client computers 101 and 103 receive data from server computers102, 104 and 106. Although five computers are shown in Figure 1, one skilled in the art will recognize that the system 100 may include many more computers. Furthermore, a server computer may also act as a client computer and receive data from any other computer connected to network 110, and similarly, a client computer may also act as a server computer and send data to other computers connected to network 110.

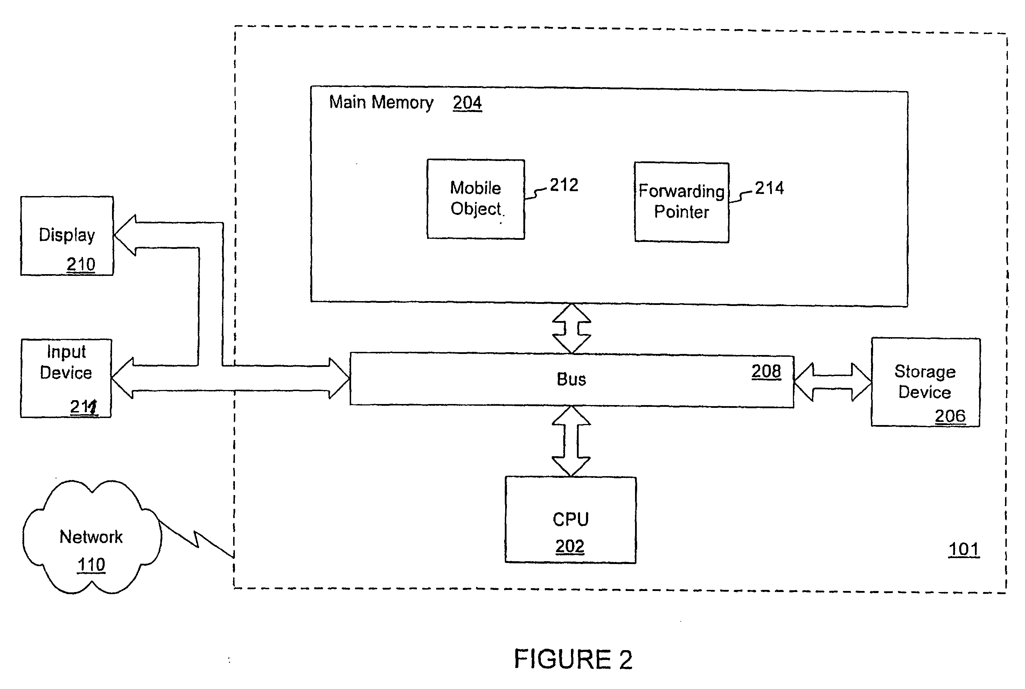

Figure 2 depicts a more detailed block diagram of a computer in accordance with the present invention, and the computer may represent any one of the client or server computers. In this case, client computer 101 is shown and includes a central processing unit (CPU) 202, a main memory 204, and a secondary storage device 206 interconnected via bus 208. Additionally, client computer 101 includes a display 210, and an input device 211. The client computer is also connected to a network 110. The main memory 204 contains a forwarding pointer 214, which references a mobile object, and a mobile object 212, which may be any mobile computational entity, object or software. Many mobile objects 212 and forwarding pointers 214 may reside in the memories of a client computer or server computer.

One skilled in the art will appreciate that aspects of methods and systems consistent with the present invention may be stored on or read from other computer readable media besides memory like secondary storage devices, such as hard disks, floppy disks, and CD ROM, or a carrier wave from a network such as the Internet. Additionally, one skilled in the art will also appreciate that the computer system may contain additional or different components.

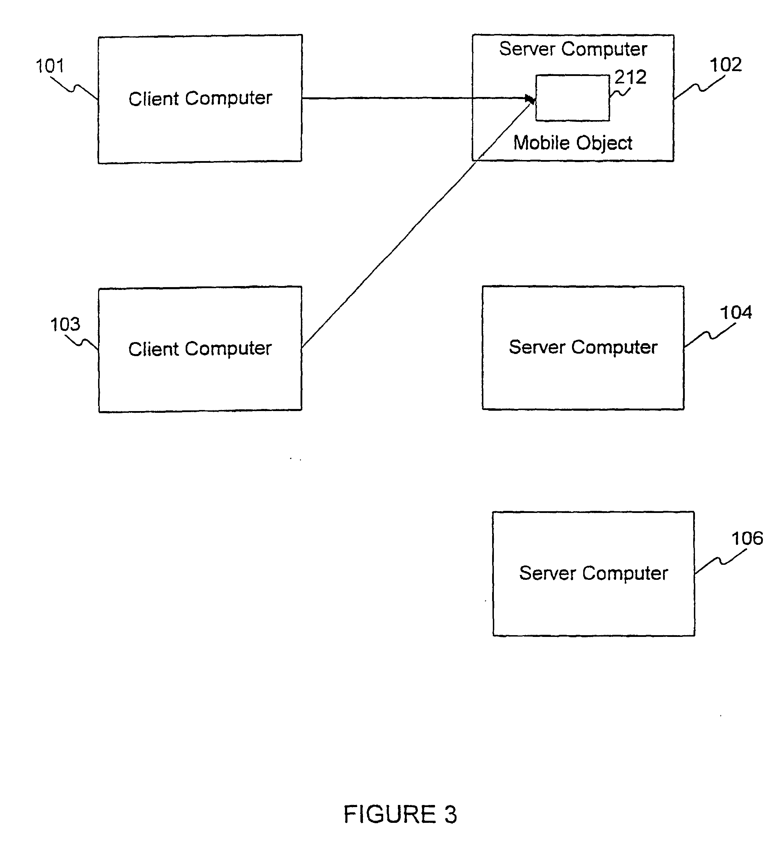

Figure 3 depicts several client and server computers and a mobile object that has not changed locations. This figure shows client computers 101 and 103, both having current leases on a mobile object 212 located on server 102. Also shown are server computers 104 and 106.

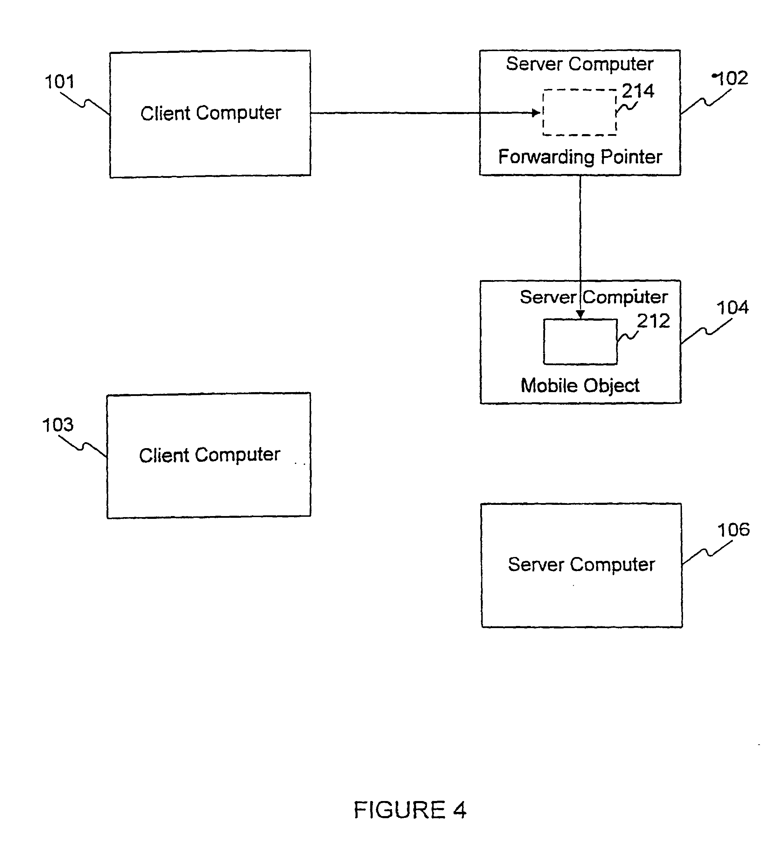

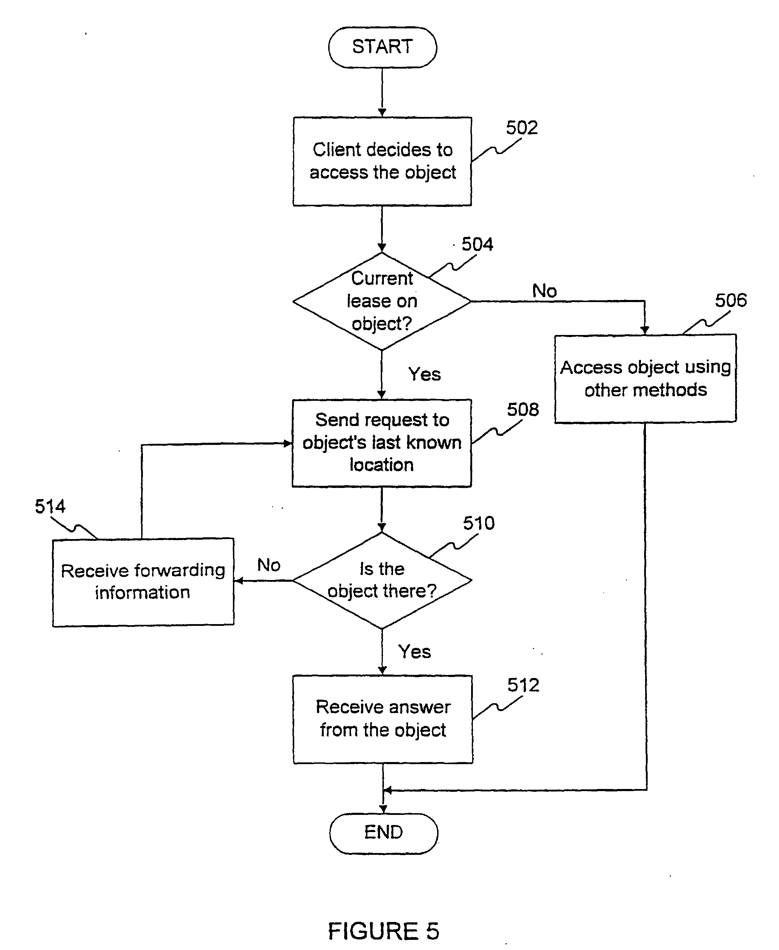

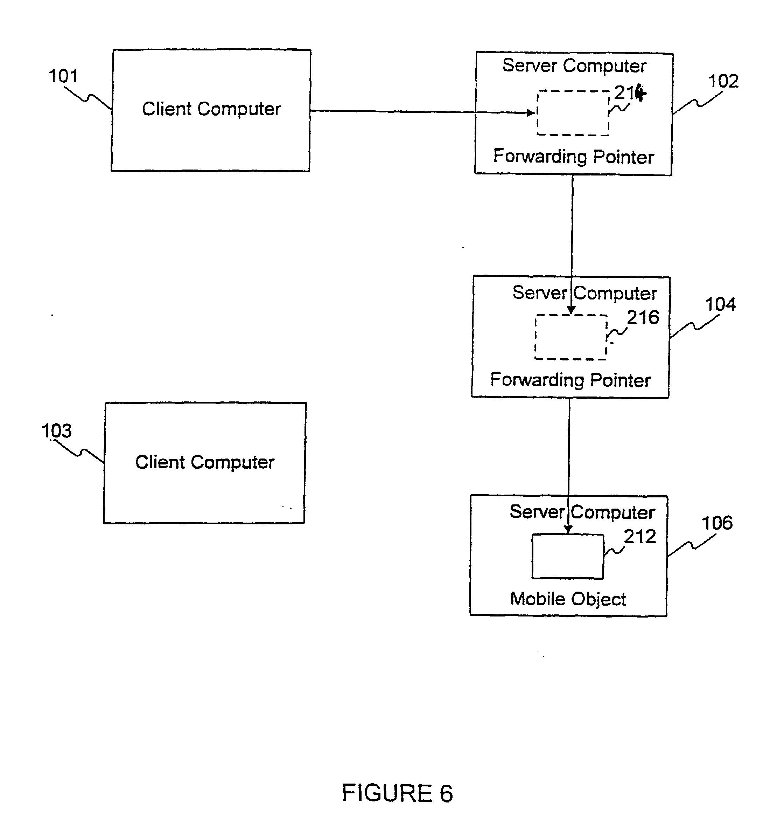

Figure 4 illustrates the same client and server computers 101 - 104, and 106, as well as the same mobile object 212. In this figure, however, it is shown that the mobile object 212 has moved from server 102 to server 104, and that client 101 is attempting to access the mobile object 212 by contacting the server 102. In accordance with the present invention, a forwarding pointer 214 has been created and left behind on the server 102. These Figures 3 and 4 will be used in conjunction with the following Figures 5 and 6 to illustrate methods and systems in accordance with the present invention.

Figure 5 is a flowchart illustrating steps used in a method for requesting by a client access to a mobile object in accordance with the present invention. When a client 101 requests access to a mobile object 212 (step 502), it first determines whether it has a validlease to the mobile object (step 504). If not, it must search for and access the mobile object 212 through other methods (step 506).

If the client 101 does have a valid lease on the mobile object 212, the client sends a request to access the mobile object 212 to its last known location. If the mobile object 212 is there (step 510), the client 101 may access the mobile object 212 which may then return a result to the client (step 512). Figure 3 illustrates this situation. The client 101 accesses the server 102 and finds the mobile object 212 on that server. If, however, the mobile object 212 is not on the accessed server 102, the client 101 receives forwarding information pointing to the location where the mobile object moved when it left the server 102 (step 514). Referring back to Figure 4, client 101 is shown accessing server 102 and being forwarded to mobile object 212 on server 104 by forwarding pointer 214. As shown on the flowchart of Figure 5, these steps 508, 510, and 514 may be repeated if the mobile object 212 has made several moves since the client's 101 last attempt to access the mobile object.

Figure 6 illustrates this scenario with several client and server computers 101 - 104, and 106, a mobile object 212 that has moved twice, and two forwarding pointers 214 and 216 in accordance with the present invention. In this scenario, the mobile object 212 has moved twice, once from server 102 to server 104, and once from server 104 to server 106. As shown, the client 101 was aware of neither move and will try to access the mobile object 212 at its last known location on server 102 where it will be forwarded to server 104 and then server 106. Aspects of the creation and operation of forwarding pointers consistent with the present invention will now be discussed.

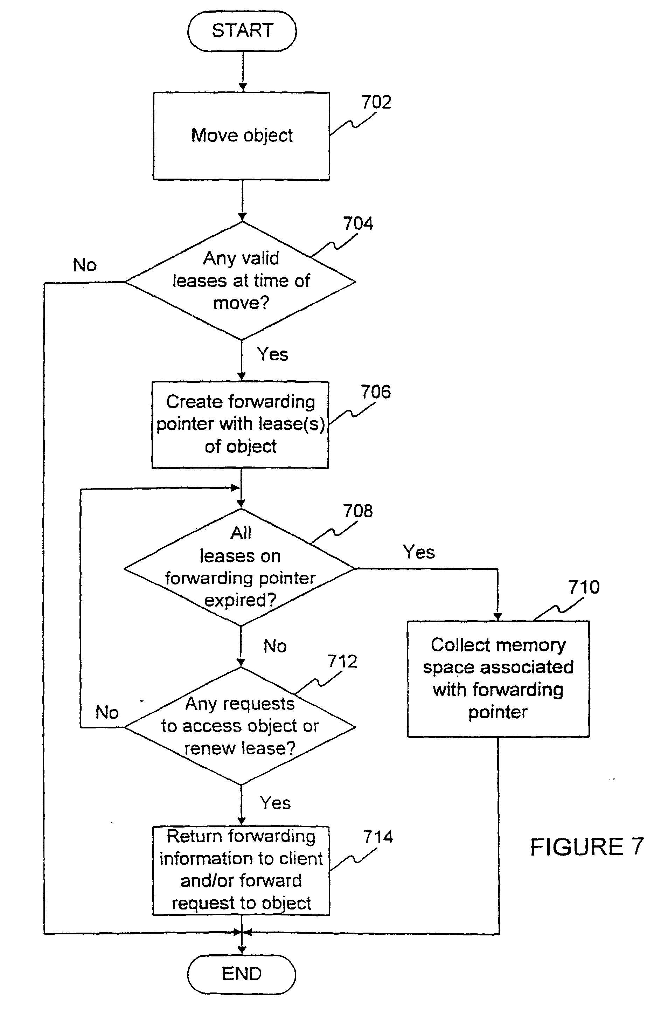

Figure 7 is a flowchart illustrating steps used in a method using a forwarding pointer in accordance with the present invention. Also with reference to Figure 4, when a mobile object 212 moves (step 702) from one server 102 to another server 104, the server 102 first determines if there are any valid leases on the object at the time of the move (step 704). If there are none, the object may move and nothing else needs to be done regarding forwarding.

If there are valid leases held on the mobile object 212 at the time of the move, a forwarding pointer 214 is created with the forwarding information for the mobile object and the current set of valid leases on the object at the time of the move. In one implementation consistent with the present invention, the forwarding pointer contains information regarding the longest outstanding valid lease held to the object instead of the set of valid leases. When the leases contained in the forwarding pointer 214 expire (step 708), the memory space used by the forwarding pointer 214 can be reclaimed or garbage collected (step 710), thereby freeing up memory resources. The system is assured that no other clients will need to access that location in search of the mobile object 212 when the last lease in the forwarding pointer 214 expires.

If the server 102 containing the forwarding pointer 214 receives a request from a client 101 to access the mobile object 212 or renew a lease on the object (step 712), it returns to the client the forwarding information on the location to which the mobile object went when it left the server 102. Alternately, or additionally, server 102 forwards the request to the mobile object.

In some situations, older forwarding pointers 214 may expire before newer ones if a mobile object 212 moves a lot and another client 103 requests a lease renewal. For example, if one client requests a lease renewal to an object that has moved, and another client is not aware of the object's original move, the forwarding pointer left when the object moves again will exist longer than the original forwarding pointer left from the first move as a result of the new longer lease.

As such, methods and systems in accordance with the present invention allow mobile objects to move freely throughout distributed systems and allow clients to access the objects without constantly being updated of each move. Furthermore, they advantageously allow forwarding pointers to disappear when they are no longer needed, thereby freeing up system resources.

The foregoing description of an implementation of the invention has been presented for purposes of illustration and description. It is not exhaustive and does not limit the invention to the precise form disclosed. Modifications and variations are possible in light of the above teaching or may be acquired from practicing of the invention. The scope of the invention is defined by the claims.

## Claims

1. A method for updating information on an object's location in a distributed system, the method comprising the steps of:
associating a lease for a client (101) with the object (212) located in a first server (102);
establishing a forwarding pointer (214) having information on the lease and location information associated with the object (212); and
moving the object (212) from the first server (102) to a second server (104).

2. The method of claim 1, further including the step of:
updating the location information to reflect movement of the object to the second server (104).

3. The method of claim 1 or claim 2, further comprising the steps of:
receiving a request from the client (101) to access the object (212);
accessing the forwarding pointer (214) for forwarding information associated with the object (212); and
returning the forwarding information associated with the object (212).

4. The method of claim 3, wherein the forwarding pointer (214) includes information on a set of one or more leases-to the object (212) for the client (101), the method further comprising the steps of:
determining whether the one or more leases in the set has expired; and
reclaiming memory associated with the forwarding pointer based on the determination.

5. The method of claim 3 or claim 4, wherein the step of receiving a request to access the object (212) further includes the step of:
receiving a request from the client (101) to renew the lease on the object.

6. The method of any of claims 3 to 5, wherein the steps of receiving a request, accessing the forwarding pointer (214), and returning the forwarding information are performed by the first server (102), and wherein the step of accessing the forwarding pointer further includes the step of:
forwarding the request to the object (212) using information on the location information from the forwarding pointer (214).

7. The method of any of claims 3 to 6, wherein the step of forwarding the request to the object (212) further includes the step of:
returning notification that the request has been forwarded.

8. The method of claim 7, wherein the step of forwarding the request to the object (213) further includes the step of:
returning forwarding information associated with the object (212).

9. A computer-readable medium containing instructions for controlling a data processing system to perform a method for updating information on an object's location in a distributed system, the method performed by a first server (102) in the distributed system comprising the steps of:
establishing a forwarding pointer (214) having information on a lease for a client (101) with the object (212) located in the first server (102) and location information associated with the object (212); and
moving the object (212) from the first server (102) to a second server (104).

10. The computer-readable medium of claim 9, wherein the method further includes the step of:
updating the location information to reflect movement of the object (212) to the second server (104).

11. The computer-readable medium of claim 9 or 10, wherein the method further comprises the steps of:
receiving a request from the client (101) to access the object (212);
accessing the forwarding pointer (214) for forwarding information associated with the object (212); and
returning the forwarding information associated with the object (212).

12. The computer-readable medium of claim 11, wherein the forwarding pointer (214) includes information on a set of one or more leases to the object (212) for the client (101), the method further comprising the steps of:
determining whether the one or more leases in the set has expired; and
reclaiming memory (204) associated with the forwarding pointer (214) based on the determination.

13. The computer-readable medium of claim 11 or 12, wherein the step of receiving a request to access the object (212) further includes the step of:
receiving a request from the client (101) to renew the lease on the object (212).

14. The computer-readable medium of any of claims 11 to 13, wherein the step of accessing the forwarding pointer (214) further includes the step of:
forwarding the request to the object (212) using information on the location information from the forwarding pointer (214).

15. The computer-readable medium of claim 14, wherein the step of forwarding the request to the object (212) further includes the step of:
returning notification that the request has been forwarded.

16. The computer-readable medium of claim 15, wherein the step of forwarding the request to the object (212) further includes the step of:
returning forwarding information associated with the object (212).

17. An apparatus for updating information on an object's location in a distributed system including a first server (102), the apparatus having:
means for receiving a request to access an object (212) that has been received from the first server (102), wherein the object (212) is associated with a lease held by a client (101) and the first server (102) establishes a first forwarding pointer (214) having information on the lease and location information associated with the object (212);
means for establishing a second forwarding pointer (216) having information on the lease and location information associated with the object (212); and
means for moving the object (212) to a second server (106).

18. The apparatus of claim 17, further including:
means for updating the location information to reflect movement of the object (212) to the second server (106).

19. The apparatus of claim 17 or 18, further comprising:
means for receiving a request from the client (101) to access the object (212);
means for accessing the forwarding pointers (214, 216) for forwarding information associated with the object (212); and
means for returning the forwarding information associated with the object (212).

20. The apparatus of claim 19, wherein the forwarding pointers include information on a set of one ore more leases to the object (212) for the client (101), the apparatus further comprising:
means for determining whether the one or more leases in the set has expired; and
means for reclaiming memory (204) associated with the forwarding pointers (214, 216) based on the determination.

21. The apparatus of claim 19 or 20, wherein the means for receiving a request to access the object further includes:
means for receiving a request from the client (101) to renew the lease on the on the object (212).

22. The apparatus of claim 19, 20 or 21, wherein the means for accessing the forwarding pointers further includes:
means for forwarding the request to the object (212) using information on the location information from the forwarding pointers (214, 216).

23. The apparatus of any of claims 19 to 22, wherein the means for forwarding the request to the object (212) further includes:
means for returning notification that the request has been forwarded.

24. The apparatus of claim 23, wherein the means for forwarding the request to the object (212) further includes:
means for . returning forwarding information associated with the object (212).

## Patentansprüche

1. Verfahren zum Aktualisieren von Informationen über den Ort eines Objekts in einem verteilten System, mit folgenden Schritten:
Zuordnen eines Lease für einen Client (101) zu dem in einem ersten Server (102) befindlichen Objekt (212),
Einrichten eines Weiterleitungszeigers (214) mit Informationen über das Lease und sich auf das Objekt beziehende Ortsinformationen (212), und
Bewegen des Objekts (212) von dem ersten Server (102) zu einem zweiten Server (104).

2. Verfahren nach Anspruch 1 mit folgendem Schritt:
Aktualisieren der Ortsinformationen, um die Bewegung des Objekts zum zweiten Server (104) wiederzugeben.

3. Verfahren nach Anspruch 1 oder 2 mit folgenden Schritten:
Empfangen einer Anforderung von dem Client (101), auf das Objekt (212) zuzugreifen,
Zugreifen auf den Weiterleitungszeiger (214) wegen das Objekt (212) betreffenden Weiterleitungsinformationen, und
Zurückgeben der das Objekt (212) betreffenden Weiterleitungsinformationen.

4. Verfahren nach Anspruch 3, wobei der Weiterleitungszeiger (214) Informationen über einen Satz von einem oder mehreren Leases des Objekts (212) für den Client (101) enthält und das Verfahren folgende weitere Schritte aufweist:
Bestimmen, ob das eine oder die mehreren Leases in dem Satz abgelaufen sind, und
Wiedergewinnen von den Weiterleitungszeiger betreffendem Speicher aufgrund der Bestimmung.

5. Verfahren nach Anspruch 3 oder 4, wobei der Schritt zum Empfangen einer Anforderung, auf das Objekt (212) zuzugreifen, folgenden Schritt enthält:
Empfangen einer Anforderung von dem Client (101) das Lease des Objekts zu erneuern.

6. Verfahren nach einem der Ansprüche 3 bis 5, wobei die Schritte zum Empfangen einer Anforderung, zum Zugriff auf den Weiterleitungszeiger (214) und zum Zurückgeben der Weiterleitungsinformationen von dem ersten Server (102) ausgeführt werden und wobei der Schritt zum Zugriff auf den Weiterleitungszeiger außerdem den folgenden Schritt enthält:
Weiterleiten der Anforderung an das Objekt (212) unter Verwendung von Informationen über die Ortsinformationen von dem Weiterleitungszeiger (214).

7. Verfahren nach einem der Ansprüche 3 bis 6, wobei der Schritt zum Weiterleiten der Anforderung an das Objekt (212) außerdem den folgenden Schritt enthält:
Zurückgeben einer Nachricht, daß die Anforderung weitergeleitet wurde.

8. Verfahren nach Anspruch 7, wobei der Schritt zum Weiterleiten der Anforderung an das Objekt (212) außerdem den folgenden Schritt enthält:
Zurückgeben von das Objekt (212) betreffenden Weiterleitungsinformationen.

9. Computerlesbares Medium mit Anweisungen zur Steuerung eines Datenverarbeitungssystems, ein Verfahren zum Aktualisieren von Informationen über den Ort eines Objekts in einem verteilten System auszuführen, wobei das Verfahren von einem ersten Server (102) in dem verteilten System mit folgenden Schritten ausgeführt wird:
Einrichten eines Weiterleitungszeigers (214) mit Informationen über ein Lease für einen Client (101) über das Objekt (212), das sich in dem ersten Server (102) befindet, und das Objekt (212) betreffenden Ortsinformationen, und
Bewegen des Objekts (212) von dem ersten Server (101) zu einem zweiten Server (104).

10. Computerlesbares Medium nach Anspruch 9, wobei das Verfahren außerdem den folgenden Schritt enthält:
Aktualisieren der Ortsinformationen, um die Bewegung des Objekts (212) zu dem zweiten Server (104) wiederzugeben.

11. Computerlesbares Medium nach Anspruch 9 oder 10, wobei das Verfahren folgende Schritte enthält:
Empfangen einer Anforderung von dem Client (101), auf das Objekt (212) zuzugreifen,
Zugreifen auf den Weiterleitungszeiger (214) wegen das Objekt (212) betreffenden Weiterleitungsinformationen, und
Zurückgeben der das Objekt (212) betreffenden Weiterleitungsinformationen.

12. Computerlesbares Medium nach Anspruch 11, wobei der Weiterleitungszeiger (214) Informationen über einen Satz aus einem oder mehreren Leases des Objekts (212) für den Client (101) enthält und das Verfahren folgende Schritte aufweist:
Bestimmen, ob das eine oder die mehreren Leases in dem Satz abgelaufen sind, und
Wiedergewinnen von den Weiterleitungszeiger (214) betreffendem Speicher (204) aufgrund der Bestimmung.

13. Computerlesbares Medium nach Anspruch 11 oder 12, wobei der Schritt zum Empfangen einer Anforderung, auf das Objekt (212) zuzugreifen, folgenden Schritt enthält:
Empfangen einer Anforderung von dem Client (101), das Lease des Objekts (212) zu erneuern.

14. Computerlesbares Medium nach einem der Ansprüche 11 bis 13, wobei der Schritt zum Zugreifen auf den Weiterleitungszeiger (214) außerdem folgenden Schritt enthält:
Weiterleiten der Anforderung an das Objekt (212) unter Verwendung von Informationen über die Ortsinformationen von dem Weiterleitungszeiger (214).

15. Computerlesbares Medium nach Anspruch 14, wobei der Schritt zum Weiterleiten der Anforderung an das Objekt (212) folgenden weiteren Schritt enthält:
Zurückgeben einer Nachricht, daß die Anforderung weitergeleitet wurde.

16. Computerlesbares Medium nach Anspruch 15, wobei der Schritt zum Weiterleiten der Anforderung an das Objekt (212) folgenden weiteren Schritt enthält:
Zurückgeben von das Objekt (212) betreffenden Weiterleitungsinformationen.

17. Vorrichtung zur Aktualisierung von Informationen über den Ort eines Objekts in einem verteilten System mit einem ersten Server (102), aufweisend:
eine Einrichtung zum Empfang einer Anforderung, auf ein Objekt (212), das vom ersten Server (102) her empfangen wurde, zuzugreifen, wobei das Objekt (212) einem Lease zugeordnet ist, das von einem Client (101) gehalten wird, und der erste Server (102) einen ersten Weiterleitungszeiger (214) mit Informationen über das Lease und das Objekt (212) betreffenden Ortsinformationen einrichtet,
eine Einrichtung zur Einrichtung eines zweiten Weiterleitungszeigers (216) mit Informationen über das Lease und das Objekt (212) betreffenden Ortsinformationen, und
eine Einrichtung zum Bewegen des Objekts (212) zu einem zweiten Server (106).

18. Vorrichtung nach Anspruch 17, aufweisend:
eine Einrichtung zum Aktualisieren der Ortsinformationen, um eine Bewegung des Objekts (212) zum zweiten Server (106) wiederzugeben.

19. Vorrichtung nach Anspruch 17 oder 18, aufweisend:
eine Einrichtung zum Empfang einer Anforderung von dem Client (101), auf das Objekt (212) zuzugreifen,
eine Einrichtung zum Zugriff auf die Weiterleitungszeiger (214, 216) wegen das Objekt (212) betreffenden Weiterleitungsinformationen, und eine Einrichtung zum Zurückgeben der das Objekt (212) betreffenden Weiterleitungsinformationen.

20. Vorrichtung nach Anspruch 19, wobei die Weiterleitungszeiger Informationen über einen Satz aus einem oder mehreren Leases des Objekts (212) für den Client (101) enthalten und die Vorrichtung außerdem aufweist:
eine Einrichtung zum Bestimmen, ob das eine oder die mehreren Leases in dem Satz abgelaufen sind, und eine Einrichtung zum Wiedergewinnen von die Weiterleitungszeiger (214, 216) betreffendem Speicher (204) aufgrund der Bestimmung.

21. Vorrichtung nach Anspruch 19 oder 20, wobei die Einrichtung zum Empfangen einer Anforderung, auf das Objekt zuzugreifen, außerdem beinhaltet:
eine Einrichtung zum Empfang einer Anforderung von dem Client (101) das Lease des Objekts (212) zu erneuern.

22. Vorrichtung nach Anspruch 19, 20 oder 21, wobei die Einrichtung zum Zugriff auf die Weiterleitungszeiger außerdem enthält:
eine Einrichtung zum Weiterleiten der Anforderung an das Objekt (212) unter Verwendung von Informationen über die Ortsinformationen von den Weiterleitungszeigern (214, 216).

23. Vorrichtung nach einem der Ansprüche 19 bis 22, wobei die Einrichtung zum Weiterleiten der Anforderung an das Objekt (212) außerdem enthält:
eine Einrichtung zum Zurückgeben einer Nachricht, daß die Anforderung weitergeleitet wurde.

24. Vorrichtung nach Anspruch 23, wobei die Einrichtung zum Weiterleiten der Anforderung an das Objekt (212) außerdem enthält:
eine Einrichtung zum Zurückgeben von das Objekt (212) betreffenden Weiterleitungsinformationen.

## Revendications

1. Procédé de mise à jour d'information sur un emplacement d'objet dans un système distribué, le procédé comprenant les étapes consistant à :
associer un contrat pour un client (101) à l'objet (212) situé sur un premier serveur (102) ;
établir un pointeur de diffusion (214) possédant des informations sur le contrat et des informations d'emplacement associées à l'objet (212) ; et
déplacer l'objet (212) du premier serveur (102) à un second serveur (104).

2. Procédé selon la revendication 1, comprenant de plus l'étape consistant à :
mettre à jour l'information d'emplacement pour refléter le déplacement de l'objet vers le second serveur (104).

3. Procédé selon les revendications 1 ou 2, comprenant de plus les étapes consistant à :
recevoir une requête d'un client (101) pour accéder à l'objet (212) ;
accéder au pointeur de diffusion (214) pour diffuser l'information associée à l'objet (212) ; et
renvoyer l'information de diffusion associée à l'objet (212).

4. Procédé selon la revendication 3, dans lequel le pointeur de diffusion (214) comprend des informations sur un ensemble de un ou plusieurs contrats portant sur l'objet (212) pour le client (101), le procédé comprenant de plus les étapes consistant à :
déterminer si un ou plusieurs contrats dans l'ensemble ont expiré ; et
récupérer la mémoire associée au pointeur de diffusion sur la base de la détermination.

5. Procédé selon les revendications 3 ou 4, dans lequel l'étape de réception d'une requête pour accéder à l'objet (212) comprend de plus l'étape consistant à :
recevoir une requête d'un client (101) pour renouveler le contrat sur l'objet.

6. Procédé selon l'une quelconque des revendications 3 à 5, dans lequel les étapes de réception d'une requête, d'accès au pointeur de diffusion (214) et de renvoi de l'information de diffusion sont réalisées par le premier serveur (102), et dans lequel l'étape d'accès au pointeur de diffusion comprend de plus l'étape consistant à :
diffuser la requête portant sur l'objet (212) en utilisant les renseignements concernant des informations d'emplacement provenant du pointeur de diffusion (214).

7. Procédé selon l'une quelconque des revendications 3 à 6, dans lequel l'étape de diffusion de la requête portant sur l'objet (212) comprend de plus l'étape consistant à :
renvoyer une notification du fait que la requête a été diffusée.

8. Procédé selon la revendication 7, dans lequel l'étape de diffusion de la requête sur l'objet (213) comprend de plus l'étape consistant à :
renvoyer l'information de diffusion associée à l'objet (212).

9. Support lisible par ordinateur contenant des instructions pour commander un système de traitement de données pour appliquer un procédé de mise à jour d'informations sur un emplacement d'objet dans un système distribué, le procédé exécuté par un premier serveur (102) dans le système distribué comprenant les étapes consistant à :
établir un pointeur de diffusion (214) possédant des informations sur un contrat pour un client (101) avec l'objet (212) situé sur le premier serveur (102) et des informations d'emplacement associées à l'objet (212) ; et
déplacer l'objet (212) du premier serveur (102) vers le second serveur (104).

10. Support lisible par ordinateur selon la revendication 9, dans lequel le procédé comprend de plus l'étape consistant à :
mettre à jour les informations d'emplacement pour refléter le déplacement de l'objet (212) vers le second serveur (104).

11. Support lisible par ordinateur selon les revendications 9 ou 10, dans lequel le procédé comprend de plus les étapes consistant à :
recevoir une requête d'un client (101) pour accéder à l'objet (212) ;
accéder au pointeur de diffusion (214) pour diffuser l'information associée à l'objet (212) ; et
renvoyer l'information de diffusion associée à l'objet (212).

12. Support lisible par ordinateur selon la revendication 11, dans lequel le pointeur de propagation (214) comprend de l'information sur un ensemble de un ou plusieurs contrats sur l'objet (212) pour le client (101), le procédé comprenant de plus les étapes consistant à :
déterminer si un ou plusieurs contrats dans l'ensemble ont expiré, et
récupérer la mémoire (204) associée au pointeur de diffusion (214) sur la base de la détermination.

13. Support lisible par ordinateur selon les revendications 11 ou 12, dans lequel l'étape de réception d'une requête pour accéder à l'objet (212) comprend de plus l'étape consistant à :
recevoir une requête d'un client (101) pour renouveler le contrat sur l'objet (212).

14. Support lisible par ordinateur selon l'une quelconque des revendications 11 à 13, dans lequel l'étape d'accès au pointeur de diffusion (214) comprend de plus l'étape consistant à :
diffuser la requête portant sur l'objet (212) en utilisant les renseignements concernant les informations d'emplacement provenant du pointeur de diffusion (214).

15. Support lisible par ordinateur selon la revendication 14, dans lequel l'étape de diffusion de la requête portant sur l'objet (212) comprend de plus l'étape consistant à :
renvoyer une notification attestant que la requête a été diffusée.

16. Support lisible par ordinateur selon la revendication 15, dans lequel l'étape de diffusion de la requête portant sur l'objet (212) comprend de plus l'étape consistant à :
renvoyer les informations de diffusion associée à l'objet (212).

17. Dispositif pour mettre à jour des informations sur un emplacement d'objet dans un système distribué comprenant un premier serveur (102), le dispositif possédant :
un moyen pour recevoir une requête pour accéder à l'objet (212) qui a été reçu du premier serveur (102), dans lequel l'objet (212) est associé à un contrat détenu par un client (101) et le premier serveur (102) établit un premier pointeur de diffusion (214) possédant de des informations sur le contrat et des informations d'emplacement associées à l'objet (212) ;
un moyen pour établir un second pointeur de diffusion (216) possédant des informations sur le contrat et des informations d'emplacement associées à l'objet (212) ; et
un moyen pour déplacer l'objet (212) vers un second serveur (106).

18. Dispositif selon la revendication 17, comprenant de plus :
un moyen pour mettre à jour les informations d'emplacement pour refléter le déplacement de l'objet (212) sur le second serveur (106).

19. Dispositif selon la revendication 17 ou 18, comprenant de plus :
un moyen pour recevoir une requête d'un client (101) pour accéder à l'objet (212) ;
un moyen pour accéder aux pointeurs de diffusion (214, 216) pour diffuser les informations associées à l'objet (212) ; et
un moyen pour renvoyer les informations de diffusion associée à l'objet (212).

20. Dispositif selon la revendication 19, dans lequel les pointeurs de diffusion comprennent des informations sur un ensemble de un ou plusieurs contrats sur l'objet (212) pour le client (101), le dispositif comprenant de plus :
un moyen pour déterminer si un ou plusieurs contrats dans l'ensemble ont expiré ; et
un moyen pour récupérer la mémoire (204) associée aux pointeurs de diffusion (214, 216) sur la base de la détermination.

21. Dispositif selon la revendication 19 ou 20, dans lequel le moyen pour recevoir une requête pour accéder à l'objet comprend de plus :
un moyen pour recevoir une requête d'un client (101) pour renouveler le contrat sur l'objet (212).

22. Dispositif selon les revendications 19, 20 ou 21, dans lequel le moyen pour accéder aux pointeurs de diffusion comprend de plus :
un moyen pour diffuser la requête portant sur l'objet (212) en utilisant les renseignements concernant les informations d'emplacement provenant des pointeurs de diffusion (214, 216).

23. Dispositif selon l'une quelconque des revendications 19 à 22, dans lequel le moyen pour diffuser la requête portant sur l'objet (212) comprend de plus :
un moyen pour renvoyer une notification attestant que la requête a été diffusée.

24. Dispositif selon la revendication 23, dans lequel le moyen pour diffuser la requête portant sur l'objet (212) comprend de plus :
un moyen pour renvoyer les informations de diffusion associées à l'objet (212).
